# EUROPÄISCHE PATENTSCHRIFT

(11) **EP 2 780 187 B1**
(45) Veröffentlichungstag und Bekanntmachung des Hinweises auf die Patenterteilung: **15.01.2020**
(21) Anmeldenummer: 12773248.5
(22) Anmeldetag: 17.09.2012
(51) Int. Cl.: B60L 53/10, B60L 53/54, B60L 1/00, B60L 1/08, B60L 53/14, B60L 3/00, B60L 53/30, B60L 53/65, B60L 58/12, B60L 58/26, B60L 58/27

(54) **VERFAHREN ZUR TEMPERIERUNG EINES FAHRZEUGES MIT ZUMINDEST TEILWEISEM ELEKTRISCHEN ANTRIEB, FAHRZEUG UND LADESTATION**
METHOD FOR CONTROLLING THE TEMPERATURE OF A VEHICLE WITH AT LEAST A PARTIAL ELECTRIC DRIVE, VEHICLE AND CHARGING STATION
PROCÉDÉ POUR LA MISE À TEMPÉRATURE D'UN VÉHICULE DOTÉ D'UN DISPOSITIF D'ENTRAÎNEMENT AU MOINS PARTIELLEMENT ÉLECTRIQUE, VÉHICULE ET STATION DE CHARGE

(30) Priorität: 17.11.2011 DE 102011086569
(43) Veröffentlichungstag der Anmeldung: 24.09.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: KOHLBERGER, Markus, 70174 Stuttgart (DE); BIEDER, Johannes, 70563 Stuttgart (DE)
(74) Vertreter: Bee, Joachim
(86) Internationale Anmeldenummer: PCT/EP2012/068208
(87) Internationale Veröffentlichungsnummer: WO 2013/072094

(56) Entgegenhaltungen:
- DE-A1-102010 036 994
- GB-A- 2 273 614
- US-A1- 2010 089 669

## Beschreibung

Die vorliegende Erfindung betrifft ein Verfahren zur Temperierung eines Fahrzeuges mit zumindest teilweisem elektrischen Antrieb, während das Fahrzeug mit einer Ladestation verbunden ist. Ferner werden ein Fahrzeug und eine Ladestation beschrieben, welche zur Durchführung des Verfahrens ausgebildet sind.

### Stand der Technik

Der Lithium-Ionen-Batterie wird eine Schlüsselrolle für die Elektrifizierung des Antriebssystems zugesprochen. Wie bei den meisten anderen elektrischen Energiespeichern sind auch bei Lithium-Ionen-Batterien die Leistungsfähigkeit und Haltbarkeit von der Temperatur abhängig. Bei tiefen Temperaturen sind die Ladefähigkeit und die Entnahme von Energie begrenzt, wohingegen bei hohen Temperaturen der Energiespeicher schneller altert. Die Heizung oder Kühlung des Energiespeichers verbraucht jedoch zusätzliche Energie. Auch bei zukünftigen Batterietechnologien wird es voraussichtlich eine gewisse Abhängigkeit von der Temperatur geben.

Ebenfalls wichtig ist der Innenraumkomfort für die Passagiere, eine aktive Heizung oder Kühlung (Klimaanlage) während der Fahrt reduziert jedoch die für die Fahrt zur Verfügung stehende Energie des elektrischen Energiespeichers.

Deshalb gibt es bereits erste Ansätze, welche es ermöglichen, die Innenraumtemperatur und die Temperatur des Energiespeichers bereits vor Abfahrt einzustellen. Hierbei wird die Innenraumtemperatur üblicherweise vom Kunden manuell gewählt. Ob eine Erwärmung des Energiespeichers benötigt wird, wird anhand der aktuellen Umgebungstemperatur (Messwert des Fahrzeugaußentemperatursensors) und der Batterietemperatur ermittelt.

Eine Studie von Robb A. Barnitt, Aaron D. Brooker, Laurie Ramroth, John Rugh and Kandler A. Smith (2010) Analysis of Off-Board Powered Thermal Preconditioning in Electric Drive Vehicles (NREL/CP-5400-49252) zeigt, dass solch eine Vorkonditionierung des Fahrzeuges die Reichweite deutlich erhöht. Jedoch hängt der Erfolg einer solchen thermischen Vorkonditionierung nur teilweise von den an der aktuellen Fahrzeugposition gemessenen Parametern ab. Ein wesentlicher Aspekt einer erfolgreichen Vorkonditionierung sind vielmehr die Parameter während der befahrenen Strecke.

Die Druckschrift US2010089669 A1 zeigt ein elektrisches Fahrzeug und ein Fahrzeugladesystem mit einer Vorrichtung zum Temperieren des Fahrzeuges.

### Offenbarung der Erfindung

Erfindungsgemäß wird ein Verfahren zur Temperierung eines Fahrzeuges mit zumindest teilweisem elektrischen Antrieb mit den Merkmalen des kennzeichnenden Teils des Anspruchs 1 zur Verfügung gestellt. Das Fahrzeug ist während der Temperierung mit einer Ladestation verbunden. Das Fahrzeug ist mit der Ladestation verbunden, wenn die Voraussetzungen gegeben sind, das Fahrzeug mit elektrischer Energie zu versorgen, also beispielsweise der Stecker eines Ladekabels der Ladestation in die Ladebuchse des Fahrzeuges gesteckt ist. Somit kann neben der Temperierung der Batterie und des Innenraumes auch die Batterie des Fahrzeuges geladen werden.

Als erster Schritt des erfindungsgemäßen Verfahrens wird eine Datenverbindung zwischen Fahrzeug und Ladestation aufgebaut, um einen Datenaustausch zwischen Fahrzeug und Ladestation in Form einer bidirektionalen Kommunikation zu ermöglichen. Dies kann beispielsweise über eine Funkverbindung oder ein Datenkabel erfolgen. Somit kann die Ladestation Daten vom Fahrzeug abfragen, oder auch das Fahrzeug Daten der Ladestation anfordern.

Als zweiter Schritt des erfindungsgemäßen Verfahrens werden fahrzeugseitige Daten mit den fahrzeugseitigen Mitteln zur Datenerfassung und ladestationsseitige Daten mit den ladestationsseitigen Mitteln zur Datenerfassung erfasst. Prinzipiell kommen als fahrzeugseitige Daten alle Daten in Betracht, die mit fahrzeugseitigen Mitteln zur Datenerfassung erfasst werden können. Als fahrzeugseitige Mittel zur Datenerfassung können alle Arten von Sensoren, als auch ein Navigationsgerät oder das Internet dienen. Analoge Überlegungen gelten für die ladestationsseitigen Daten und ladestationsseitigen Mittel zur Datenerfassung.

Als dritter Schritt werden optimale Temperierparameter von Batterie und Innenraum mithilfe der erfassten Daten, welche von einer Logik verarbeitet werden, bestimmt. Die Temperierparameter werden dann als optimal angesehen, wenn auf ihrer Basis die Batterie und der Innenraum derart temperiert werden können, dass der zu erwartende Energieaufwand für eine Temperierung während der Fahrt minimiert wird. Als mögliche Temperierparameter können beispielsweise Temperaturen von Batterie und Innenraum nach Beendigung der Temperierung, sowie ihre Verläufe über die Zeit genannt werden. Die Logik kann in Form von Algorithmen realisiert sein, welche in der Lage sind, die gelieferten Daten zu verarbeiten. Diese kann sowohl im Fahrzeug als auch in der Ladestation beispielsweise in Form geeigneter Soft- und Hardware angeordnet sein.

Als vierter Schritt erfolgt die Durchführung der Temperierung der Batterie und des Innenraumes des Fahrzeuges mit den Mitteln zur Temperierung. Mit der Temperierung des Innenraumes ist nicht nur die Temperierung der Luft im Fahrgastraum gemeint, sondern auch die Temperierung von mit der Luft in Wärme leitendem Kontakt stehenden Anbauteilen, wie beispielsweise der Fahrgastzelleninnenverkleidung. Die zur Temperierung notwendige Energie stammt aus der Ladestation. Die Mittel zur Temperierung umfassen einerseits Mittel zur Temperierung des Innenraumes (z. B. Gebläse, Heizung, Klimagerät) sowie Mittel zur Temperierung der Batterie (z. B. Luft- oder Flüssigkeitstemperierung, mit oder ohne Kältemaschine). Die Temperierung der Batterie und des Innenraumes kann prinzipiell automatisch (ohne weiteres Zutun), automatisch nach einer Bestätigung seitens des Benutzers oder manuell erfolgen. Die automatische Temperierung kann über mehrere Grundeinstellungen (z. B. Economy, Normal und Komfort), sowie an die Region angepasste Profile (Mitteleuropa, Tropen, Wüste etc.) verfügen. Bei einer manuellen Temperierung kann der Benutzer vorgegebene Temperierparameter abändern, oder vollständig frei eingeben. Insbesondere kann eine manuelle Temperierung des Innenraumes erfolgen, während die Temperierung der Batterie automatisch (wiederum mit oder ohne Bestätigung seitens des Benutzers) durchgeführt wird. Bei der manuellen Temperierung werden die optimalen Temperierparameter dem Benutzer zur Verfügung gestellt - beispielsweise über ein Display. Vorzugsweise wird dem Fahrer auch angezeigt, wie sehr sich die erwartete Reichweite aufgrund seiner Einstellungen verbessern oder verschlechtern wird.

Durch Einbeziehen mehrerer Einflussgrößen können mit dem erfindungsgemäßen Verfahren die optimale Innenraum- und Batterietemperatur vom System ermittelt werden. Dadurch wird die elektrische Reichweite und Leistungsfähigkeit der Batterie optimal ausgenutzt, da während der Fahrt von der Batterie weniger Energie zur Temperierung aufgebracht werden muss.

Gemäß einer bevorzugten Ausgestaltung der Erfindung umfasst das erfindungsgemäße Verfahren zusätzlich einen fünften Schritt. In diesem Schritt werden die Mittel zur Temperierung derart eingestellt, dass bei der folgenden Weiterfahrt der Innenraum optimal temperiert werden kann. Somit ergibt sich auch bei der Weiterfahrt eine möglichst energiesparende Temperierung des Innenraumes. Für diesen Schritt gelten prinzipiell die gleichen Möglichkeiten bezüglich einer automatischen oder manuellen Temperierung wie unter Schritt (IV) angeführt, wobei bei der manuellen Temperierung dem Benutzer wiederum die optimalen Temperierparameter angezeigt werden.

Vorzugsweise umfassen die von den fahrzeugseitigen Mitteln zur Datenerfassung erfassten Daten zumindest einen der folgenden Punkte, wobei mögliche fahrzeugseitige Mittel zur Datenerfassung in Klammern angeführt sind:
- aktuelle Temperatur des Innenraumes und der Batterie (laut Temperatursensoren im Fahrzeug)
- momentaner Ladezustand der Batterie - es ist mit einer Erwärmung der Batterie während des Ladevorgangs abhängig von der zugeführten Energie zu rechnen (laut Ladestandserfassung)
- aktuell gewählte Wunschtemperatur des Innenraumes (laut eingestellten und erfassten Werten der Klimaanlage)
- Daten zu Fahr- und Komfortgewohnheiten - Fahrweise, Nutzungsverhalten der Klimaanlage, Fahren bei offenem Fenster etc. (aufgezeichnete und in einem Speicher hinterlegte Daten)
- Erkennen von außergewöhnlichen Ereignissen, wie z. B. eines Staus, die eine Abweichung gegenüber der normalen Nutzung verursachen (aus Algorithmen zum Erkennen von Abweichungen gegenüber der normalen Nutzung gewonnene Daten).
- Fahrziel bzw. nächste Ladestation (Daten aus Navigationssystem)
- Präferierte Ladestation (aufgezeichnete und in einem Speicher hinterlegte Daten)
- Außentemperatur (laut Fahrzeugaußentemperatursensor)
- Erkennen, ob sich während des Ladevorganges Personen im Fahrzeug befinden (Sitzbelegungserkennung, Schlüsseltransponder),
- Temperatur und Wetter am Zielort zur Ankunftszeit und während des Reiseverlaufs (Daten der Wettervorhersage aus dem Internet, wenn das Fahrzeug eine Verbindung zum Internet aufbauen kann)

Vorzugsweise umfassen die von den ladestationsseitigen Mitteln zur Datenerfassung erfassten Daten zumindest einen der folgenden Punkte, wobei mögliche ladestationsseitige Mittel zur Datenerfassung in Klammern angeführt sind:
- Umgebungstemperatur der Ladestation, z. B. innerhalb einer Garage oder eines Parkhauses (Temperatursensor an Ladestation)
- Außentemperatur und Wetterparameter am Standort im Freien, z. B. außerhalb der Garage oder des Parkhauses (Daten von mit der Ladestation vernetzten Sensoren, die Temperaturen in Sonne und Schatten sowie Niederschlag messen und zudem die aktuelle und beispielsweise über den Tag gemittelte Sonneneinstrahlung bzw. deren Intensität ermitteln können, z. B. eine bestehende Wetterstation)
- Temperatur und Wetter am Zielort zur Ankunftszeit und während des Reiseverlaufs (Daten der Wettervorhersage aus dem Internet)
- Länge der zurückzulegenden Strecke sowie Streckenwahl - Autobahn, Landstraße etc., Steigungen, Gefälle etc. (Daten von Kartenmaterial aus dem Internet auf Basis von Zieleingaben aus dem Fahrzeug)
- gewählter Ladevorgang - z. B. schnell oder normal (Eingabe an der Ladestation)

Bevorzugt wird neben der Batterie und dem Innenraum auch noch ein Latentwärmespeicher temperiert. Dieser Latentwärmespeicher speichert thermische Energie möglichst verlustarm. Während der Fahrt kann die gespeicherte Wärme bei Bedarf abgegeben werden und so die Batterie und/oder den Innenraum erwärmen, ohne die in der Batterie gespeicherte elektrische Energie zu verringern.

Gemäß einer weiteren bevorzugten Ausgestaltung der Erfindung erfolgt die Temperierung während des Ladevorganges der Batterie. Dadurch ist das Fahrzeug fertig temperiert, wenn der Ladevorgang beendet ist. Insbesondere bevorzugt beginnt die Temperierung bei oder nach dem Start des Ladevorgangs und endet vor oder gleichzeitig mit dem Ende des Ladevorganges.

Sollte das Fahrzeug jedoch länger geparkt sein, als es geladen wird, so kann die Temperierung bevorzugt zumindest teilweise nach dem Ladevorgang der Batterie erfolgen. Ein möglicher vorangehender Teil der Temperierung kann bereits während des Ladevorganges stattfinden.

Vorzugsweise ist die Batterie eine Lithium-Ionen-Batterie. Durch die Verwendung der Lithium-Ionen Technologie können besonders hohe Energiespeicherdichten erzielt werden, was besonders im Bereich der Elektromobilität zu weiteren Vorteilen führt.

Ferner werden ein Fahrzeug und eine Ladestation, welche zur Durchführung des Verfahrens geeignet sind, zur Verfügung gestellt. Diese umfassen die Mittel zur Datenerfassung und sind dazu ausgebildet, untereinander bidirektional Daten auszutauschen. Zudem umfasst zumindest das Fahrzeug oder die Ladestation die Logik zur Bestimmung der optimalen Temperierparameter.

Vorteilhafte Weiterbildungen der Erfindung sind in den Unteransprüchen angegeben.

### Zeichnungen

Ausführungsbeispiele der Erfindung werden anhand der Zeichnungen und der nachfolgenden Beschreibung näher erläutert. Es zeigen:
Figur 1 eine schematische Darstellung der Temperierung, und
Figur 2 eine schematische Darstellung der Entscheidungsfindung, ob sich die Temperierung des Innenraumes auf eine Belüftung des Innenraumes beschränken soll.

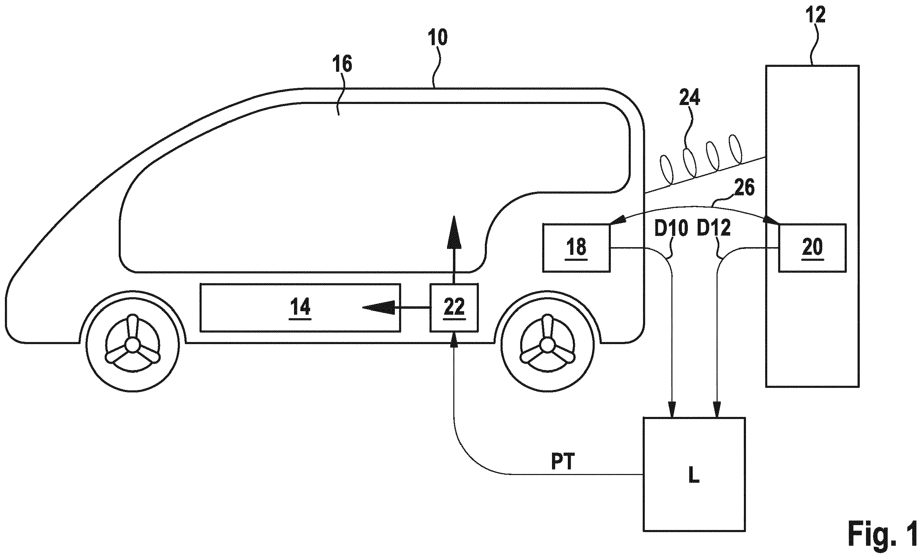

Figur 1 zeigt eine schematische Darstellung des erfindungsgemäßen Verfahrens zur Temperierung eines Innenraumes 16 und einer Batterie 14 eines Fahrzeuges 10, während das Fahrzeug 10 mit einer Ladestation 12 beispielsweise über ein Ladekabel 24 verbunden ist. Das Fahrzeug umfasst fahrzeugseitige Mittel zur Datenerfassung 18, während die Ladestation ladestationsseitige Mittel zur Datenerfassung 20 umfasst. Im Fahrzeug sind Mittel zur Temperierung 22 angeordnet, welche dazu ausgebildet sind, die Batterie 14 und den Innenraum 16 unabhängig voneinander zu temperieren.

Zunächst wird eine Datenverbindung 26 zur bidirektionalen Kommunikation aufgebaut. Über diese Datenverbindung 26 können das Fahrzeug 10 und die Ladestation 12 miteinander kommunizieren und so Daten anfordern oder austauschen, wobei die Datenverbindung 26 beispielsweise als Kabel- oder Funkverbindung realisiert sein kann. Im nächsten Schritt ermitteln die fahrzeugseitigen Mittel zur Datenerfassung 18 die fahrzeugseitigen Daten D10 und die ladestationsseitigen Mittel zur Datenerfassung 20 die ladestationsseitigen Daten D12. Diese werden in Folge an eine Logik L übermittelt. Die Logik L kann beispielsweise im Fahrzeug 10 oder in der Ladestation 14 auf geeigneter Hardware betrieben werden. Ziel der Logik L ist es im dritten Schritt, alle zur Verfügung stehenden Daten 18, 20 mit geeigneten Algorithmen zu verwerten, um als Ergebnis an optimale Temperierparameter PT zu gelangen. Die Temperierparameter PT dienen als Eingangsgröße für die Mittel zur Temperierung 22, welche daraufhin eine optimale Temperierung der Batterie 14 und des Innenraumes 16 durchführen können. Die Temperierung ist schematisch über die Pfeile ausgehend von den Mitteln zur Temperierung 22 in die Batterie 14 und den Innenraum 16 angedeutet, wobei der Wärmestrom je nach Kühlung oder Heizung der Batterie 14 und des Innenraums 16 in beide Richtungen gerichtet sein kann. Die Temperierung kann entweder vollautomatisch oder nach manueller Bestätigung bzw. Eingabe erfolgen.

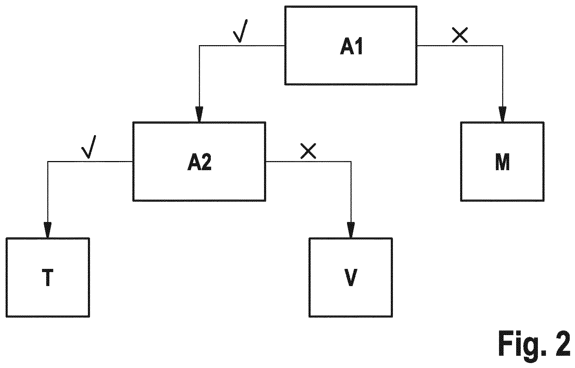

Wird anhand der fahrzeugseitigen Daten D10 erkannt, dass während der Fahrt zeitweise Fenster offen waren, kann sich die Temperierung des Innenraumes 16 auf das Betreiben der Innenraumlüftung (nur Gebläse ohne Kühlung oder Heizung) beschränken. Dies reduziert den Strombedarf an der Ladestation und führt zu keinen nennenswerten Komforteinbußen, da zu erwarten ist, dass der Fahrzeuglenker erneut das Fenster öffnen wird. Figur 2 zeigt eine schematische Darstellung der Entscheidungsfindung, ob sich die Temperierung des Innenraumes 16 auf die reine Belüftung des Innenraumes 16 beschränken soll. Zuerst erfolgt die erste Abfrage A1, welche überprüft, ob im Moment alle Fenster geschlossen sind. Sollte zumindest ein Fenster geöffnet sein, erfolgt eine Meldung M an den Fahrer. Sind alle Fenster geschlossen, erfolgt die zweite Abfrage A2, welche anhand aufgezeichneter Daten überprüft, ob während der Fahrt überwiegend alle Fenster geschlossen waren. Ist dies der Fall, erfolgt die erfindungsgemäße Temperierung des Innenraumes 16 und der Batterie 14. Ist dies nicht der Fall - wenn also der Fahrer mit offenem Fenster gefahren ist - so beschränkt sich die Temperierung des Innenraumes auf das Betreiben der Innenraumlüftung.

Folgend sind drei Beispiele angeführt, um die Funktionsweise des erfindungsgemäßen Verfahrens zu demonstrieren.

### Beispiel 1:

An einem sonnigen heißen Sommertag befindet sich die Ladestation 12 an einem schattigen Ort. Die Fahrgäste verlassen das Fahrzeug 10 während des Ladevorganges. Würden die Temperierparameter allein anhand von am Fahrzeug 10 oder an der Ladestation 12 positionierten Temperatursensoren ermittelt werden, würde der Kühlungsbedarf für Innenraum 16 und Batterie 14 als zu gering ermittelt werden. Ein zusätzlicher Temperatursensor in der Sonne liefert nun aber zusätzliche Informationen zur Erwärmung, die das Fahrzeug 10 während der Weiterfahrt höchstwahrscheinlich erfahren wird. Aus weiteren aufgezeichneten fahrzeugseitigen Daten D10 ist bekannt, dass bei der Fahrt zur Ladestation 12 die Klimaanlage aktiv und alle Fenster geschlossen waren, weswegen während des Ladevorganges der Innenraum 16 abgekühlt wird. Diese Temperierung des Innenraums 16 wird aber kurz vor Ende des Ladevorgangs oder kurz vor der geplanten Weiterfahrt gestoppt, damit die gefühlte Lufttemperatur für die Passagiere nicht unangenehm kalt ist, aber dennoch die Sitze und Interieurteile gekühlt sind.

### Beispiel 2:

An einem sonnigen Frühlingstag bleibt der Fahrer während des Ladevorgangs im Fahrzeug 10 sitzen, die Ladestation 12 steht im Freien in der Sonne. Durch einen zweiten Temperatursensor im Schatten wird der Ladestation 12 und dem Fahrzeug 10 jedoch übermittelt, dass die Außentemperatur geringer ist, als durch die direkte Sonneneinstrahlung ermittelt wurde. Aus den Daten des Navigationssystems ist zusätzlich ersichtlich, dass das Ziel der Fahrt ein Wintersportort ist. Durch Daten aus dem Internet ist zudem bekannt, dass etwa auf halber Strecke die Dämmerung einsetzen wird, was zu einer zusätzlichen Abkühlung führen wird. Ebenso ist im Internet oder erweitertem Kartenmaterial des Navigationsgerätes eine lange Bergauffahrt auf einer Autobahn ersichtlich, welche eine starke Batteriebelastung erwarten lässt. Aufgrund der ermittelten Daten werden als Temperierparameter die Fahrzeuginnentemperatur etwas höher als normal vorgeschlagen, die Batterietemperatur jedoch nahe der unteren Grenze belassen, um eine zusätzliche Kühlung während der schnellen Bergaufpassage zu vermeiden. Die Anpassung der Innenraumtemperatur erfolgt hierbei etwas langsamer, als wenn sich keine Person im Fahrzeug 10 befinden würde. Dies kann beispielsweise erfolgen, indem temperierte Luft nicht direkt auf den Fahrer geleitet wird.

### Beispiel 3:

Es ist Winter und die Temperaturen befinden sich unter dem Gefrierpunkt. Die Fahrgäste verlassen das Fahrzeug 10, während dieses in einer Tiefgarage mit einer Ladestation 12 verbunden ist. Durch Messungen einer mit der Ladestation 12 vernetzten Wetterstation ist bekannt, dass die Außentemperatur wesentlich niedriger als die Temperatur in der Tiefgarage ist. Deshalb wird die Batterie 14 geheizt. Wenn ein Latentwärmespeicher vorhanden ist, wird dieser maximal vortemperiert. Während des Beladens des Fahrzeuges, dem Zurückbringen des Einkaufswagens und Begleichen des Parktickets wird der Innenraum durch Anheben der Lufttemperatur und Aktivieren von Sitzheizung, Lenkradheizung, Spiegelheizung, Frontscheibenheizung etc. auf angenehme Werte temperiert, noch während das Fahrzeug mit der Ladestation verbunden ist. Ein eventuell vorhandener Speicherverdampfer der Klimaanlage wird vorgeladen, damit die Kondensation an Scheiben bei der Ausfahrt aus der Tiefgarage einfach kontrolliert werden kann.

## Patentansprüche

1. Verfahren zur Temperierung eines Fahrzeuges (10) mit zumindest teilweise elektrischem Antrieb, während das Fahrzeug (10) mit einer Ladestation (12) verbunden ist, wobei der Stecker eines Ladekabels (24) der Ladestation (12) in die Ladebuchse des Fahrzeugs (10) gesteckt ist, umfassend die folgenden Schritte:
(I) Aufbauen einer Datenverbindung (26) zur bidirektionalen Kommunikation zwischen Fahrzeug (10) und Ladestation (12) über eine Funkverbindung oder ein Datenkabel,,
(II) Erfassen von fahrzeugseitigen Daten (D10) mit fahrzeugseitigen Mitteln zur Datenerfassung (18) und Erfassen von ladestationsseitigen Daten (D12) mit ladestationsseitigen Mitteln zur Datenerfassung (20), wobei zur Datenerfassung alle Arten von Sensoren, ein Navigationsgerät oder das Internet dienen,
(III) Bestimmen von optimalen Temperierparametern (PT) von Batterie (14) und Fahrgastzelle (16) durch eine Logik (L) mittels Verarbeitung der erfassten fahrzeugseitigen und ladestationsseitigen Daten (D10, D12), und
(IV) Durchführen der Temperierung der Batterie (14) und des Innenraumes (16) des Fahrzeuges (10) mit Mitteln zur Temperierung (22) anhand der optimalen Temperierparameter (PT) wobei die zur Temperierung notwendige Energie aus der Ladestation (12) stammt,
**dadurch gekennzeichnet, dass** die Temperierparameter (PT) dann als optimal angesehen werden, wenn auf ihrer Basis die Batterie (14) und der Innenraum (16) des Fahrzeugs (10) derart temperiert werden können, dass der zu erwartende Energieaufwand für die Temperierung während der Fahrt minimiert wird, dass die Temperierung des Innenraumes (16) die Temperierung der Luft im Fahrgastraum und die Temperierung von mit der Luft in wärmeleitendem Kontakt stehenden Anbauteilen beinhaltet, und dass die fahrzeugseitigen Daten (D10) und die ladestationsseitigen Daten (D12) Temperatur und Wetter am Zielort zur Ankunftszeit und während des Reiseverlaufs aus einer Wettervorhersage aus dem Internet umfassen.

2. Verfahren zur Temperierung nach Anspruch 1, zusätzlich umfassend einen Schritt (V) des Einstellens der Mittel zur Temperierung (22) zur Temperierung des Innenraumes (16) für die Weiterfahrt.

3. Verfahren zur Temperierung nach einem der vorhergehenden Ansprüche, wobei die fahrzeugseitigen Daten (D10) zumindest einen der folgenden Punkte umfassen:
- aktuelle Temperatur des Innenraumes (16) und der Batterie (14)
- momentaner Ladezustand der Batterie (14)
- aktuell gewählte Wunschtemperatur des Innenraumes (16)
- Daten zu Fahr- und Komfortgewohnheiten
- Erkennen von außergewöhnlichen Ereignissen
- Fahrziel bzw. nächste Ladestation (12)
- Präferierte Ladestation (12)
- Außentemperatur
- Erkennen, ob sich während des Ladevorganges Personen im Fahrzeug (10) befinden.

4. Verfahren zur Temperierung nach einem der vorhergehenden Ansprüche, wobei die ladestationsseitigen Daten (D12) zumindest einen der folgenden Punkte umfassen:
- Umgebungstemperatur der Ladestation (12)
- Außentemperatur und Wetterparameter am Standort
- Temperatur und Wetter am Zielort zur Ankunftszeit und während des Reiseverlaufs
- Länge der zurückzulegenden Strecke sowie Streckenwahl
- gewählter Ladevorgang.

5. Verfahren zur Temperierung nach einem der vorhergehenden Ansprüche, wobei neben der Batterie (14) und dem Innenraum (16) noch ein Latentwärmespeicher temperiert wird.

6. Verfahren zur Temperierung nach einem der vorhergehenden Ansprüche, wobei die Temperierung während des Ladevorganges der Batterie (14) erfolgt.

7. Verfahren zur Temperierung nach einem der vorhergehenden Ansprüche, wobei die Temperierung zumindest teilweise nach dem Ladevorgang der Batterie (14) erfolgt.

8. Verfahren zur Temperierung nach einem der vorhergehenden Ansprüche, wobei die Batterie (14) eine Lithium-Ionen-Batterie ist.

9. Fahrzeug (10), welches zur Durchführung des Verfahrens nach einem der Ansprüche 1 bis 8 geeignet ist.

10. Ladestation (12), welche zur Durchführung des Verfahrens nach einem der Ansprüche 1 bis 8 geeignet ist.

## Claims

1. Method for controlling the temperature of a vehicle (10) with at least a partially electric drive while the vehicle (10) is connected to a charging station (12), wherein the plug of a charging cable (24) of the charging station (12) is plugged into the charging socket of the vehicle (10), comprising the following steps:
(I) setting up a data link (26) for bidirectional communication between the vehicle (10) and the charging station (12) via a radio link or a data cable,
(II) acquiring vehicle-side data (D10) with vehicle-side means (18) for acquiring data and acquiring charging-station-side data (D12) with charging-station-side means (20) for acquiring data,
wherein all types of sensors, a navigation device or the Internet serve for acquiring data,
(III) determining optimum temperature control parameters (PT) of the battery (14) and passenger cell (16) by means of a logic means (L) by processing the acquired vehicle-side and charging-station-side data (D10, D12), and
(IV) carrying out the temperature control of the battery (14) and of the passenger compartment (16) of the vehicle (10) with temperature control means (22) on the basis of the optimum temperature control parameters (PT), wherein the energy necessary for temperature control originates from the charging station (12),
**characterized in that** the temperature control parameters (PT) are considered to be optimum when they can be used as a basis for controlling the temperature of the battery (14) and the passenger compartment (16) of the vehicle (10) in such a way that the expected expenditure of energy for temperature control during travel is minimized, **in that** the temperature control of the passenger compartment (16) includes the temperature control of the air in the passenger compartment and the temperature control of installation components which are in thermal contact with the air, and **in that** the vehicle-side data (10) and the charging-station-side data (D12) comprise temperature and weather at the destination at the arrival time and during the course of the journey from a weather forecast from the Internet.

2. Method for controlling the temperature according to Claim 1, additionally comprising a step (V) of setting the temperature control means (22) for controlling the temperature of the passenger compartment (16) for continued travel.

3. Method for controlling the temperature according to one of the preceding claims, wherein the vehicle-side data (D10) comprise at least one of the following points:
- current temperature of the passenger compartment (16) and of the battery (14),
- current state of charge of the battery (14),
- currently selected desired temperature of the passenger compartment (16),
- data on the travel habits and comfort habits,
- detection of unusual events,
- destination or next charging station (12),
- preferred charging station (12),
- outside temperature,
- detecting whether persons are located in the vehicle (10) during the charging process.

4. Method for controlling the temperature according to one of the preceding claims, wherein the charging-station-side data (D12) comprise at least one of the following points:
- ambient temperature of the charging station (12),
- outside temperature and weather parameters at the location,
- temperature and weather at the destination at the arrival time and during the course of the journey,
- length of the distance to be traveled and selection of route, and
- selected charging process.

5. Method for controlling the temperature according to one of the preceding claims, wherein in addition to the battery (14) and the passenger compartment (16) the temperature of a latent heat accumulator is also controlled.

6. Method for controlling the temperature according to one of the preceding claims, wherein the temperature control is carried out during the charging process of the battery (14).

7. Method for controlling the temperature according to one of the preceding claims, wherein the temperature control is carried out at least partially after the charging process of the battery (14).

8. Method for controlling the temperature according to one of the preceding claims, wherein the battery (14) is a lithium-ion battery.

9. Vehicle (10) which is suitable for carrying out the method according to one of Claims 1 to 8.

10. Charging station (12) which is suitable for carrying out the method according to one of Claims 1 to 8.

## Revendications

1. Procédé de régulation de température d'un véhicule (10) à propulsion au moins partiellement électrique alors que le véhicule (10) est relié à une station de charge (12), dans lequel la fiche d'un câble de charge (24) de la station de charge (12) est enfichée dans la prise de charge du véhicule (10), comprenant les étapes suivantes :
(I) l'établissement d'une liaison de données (26) pour une communication bidirectionnelle entre le véhicule (10) et la station de charge (12) par l'intermédiaire d'une liaison radio ou d'un câble de données,
(II) l'acquisition de données côté véhicule (D10) à l'aide de moyens côté d'acquisition de données côté véhicule (18) et l'acquisition de données côté station de charge (D12) à l'aide de moyens d'acquisition de données côté station de charge (20), dans lequel tous types de capteurs, un appareil de navigation ou l'Internet sont utilisés pour l'acquisition de données,
(III) la détermination de paramètres de régulation de température optimaux (PT) de la batterie (14) et de l'habitacle (16) par un système logique (L) au moyen d'un traitement des données acquises côté véhicule et côté station de charge (D10, D12), et
(IV) l'exécution de la régulation de température de la batterie (14) et de l'espace intérieur (16) du véhicule (10) à l'aide de moyens de régulation de température (22) sur la base des paramètres de régulation de température optimaux (PT), dans lequel l'énergie nécessaire à la régulation de température provient de la station de charge (12),
**caractérisé en ce que** les paramètres de régulation de température (PT) sont considérés comme optimaux lorsque la batterie (14) et l'espace intérieur (16) du véhicule (10) peuvent être régulés en température sur la base de ceux-ci de manière à rendre minimale la consommation d'énergie prévue pour la régulation de température pendant le trajet, **en ce que** la régulation de température de l'espace intérieur (16) comprend la régulation de température de l'air dans l'habitacle et la régulation de température d'éléments complémentaires qui sont en contact conducteur de chaleur avec l'air, et **en ce que** les données côté véhicule (D10) et les données côté station de charge (D12) comprennent la température et les conditions météorologiques au lieu d'arrivée et pendant le trajet, obtenues à partir de prévisions météorologiques provenant de l'Internet.

2. Procédé de régulation de température selon la revendication 1, comprenant en outre une étape (V) de réglage des moyens de régulation de température (22) pour réguler la température de l'espace intérieur (16) en vue de la poursuite du trajet.

3. Procédé de régulation de température selon l'une des revendications précédentes, dans lequel les données côté véhicule (D10) comprennent au moins l'un des éléments suivants :
- température actuelle de l'espace intérieur (16) et de la batterie (14)
- état de charge actuel de la batterie (14)
- température actuellement sélectionnée de l'espace intérieur (16)
- données concernant les habitudes de conduite et de confort
- détection d'événements inhabituels
- destination ou station de charge (12) suivante
- station de charge (12) préférée
- température extérieure
- détection de la présence ou non de personnes dans le véhicule (10) pendant le processus de charge.

4. Procédé de régulation de température selon l'une des revendications précédentes, dans lequel les données côté station de charge (D12) comprennent au moins l'un des éléments suivants :
- température ambiante de la station de charge (12)
- température extérieure et paramètres météorologiques sur le site
- température et conditions météorologiques à destination au moment de l'arrivée et pendant le trajet
- longueur de l'itinéraire à parcourir et choix de l'itinéraire
- processus de charge sélectionné.

5. Procédé de régulation de température selon l'une des revendications précédentes, dans lequel, en plus de la batterie (14) et de l'espace intérieur (16), un accumulateur de chaleur latente est également régulé en température.

6. Procédé de régulation de température selon l'une des revendications précédentes, dans lequel la régulation de température a lieu pendant le processus de charge de la batterie (14).

7. Procédé de régulation de température selon l'une des revendications précédentes, dans lequel la régulation de température a lieu au moins partiellement après le processus de charge de la batterie (14).

8. Procédé de régulation de température selon l'une des revendications précédentes, dans lequel la batterie (14) est une batterie au lithium-ion.

9. Véhicule (10) approprié pour la mise en œuvre du procédé selon l'une des revendications 1 à 8.

10. Station de charge (12) appropriée pour la mise en œuvre du procédé selon l'une des revendications 1 à 8.
